# EUROPEAN PATENT SPECIFICATION

(11) **EP 2 623 911 B1**
(45) Date of publication and mention of the grant of the patent: **22.11.2017**
(21) Application number: 11828256.5
(22) Date of filing: 25.02.2011
(51) Int. Cl.: F28D 20/00, F24F 5/00, F25B 1/00, F28F 9/02, F28D 1/047, F25B 31/00, F25B 47/02, F28D 1/06, F28D 1/02

(54) **AIR CONDITIONER COMPRISING A HEAT STORAGE DEVICE**
KLIMAANLAGE MIT WÄRMESPEICHERVORRICHTUNG
CONDITIONNEUR D'AIR COMPRENANT UN DISPOSITIF DE STOCKAGE DE CHALEUR

(30) Priority: 28.09.2010 JP 2010216455
(43) Date of publication of application: 07.08.2013
(73) Proprietor: Panasonic Corporation, Osaka 571-8501 (JP)
(72) Inventor: SHIMIZU, Akihiko, Osaka 540-6207 (JP); KURISUTANI, Hiroharu, Osaka 540-6207 (JP); IMASAKA, Toshiyuki, Osaka 540-6207 (JP); KUBO, Tsugio, Osaka 540-6207 (JP); AKAMINE, Ikuo, Osaka 540-6207 (JP)
(74) Representative: Eisenführ Speiser
(86) International application number: PCT/JP2011/001087
(87) International publication number: WO 2012/042686

(56) References cited:
- WO-A1-85/04086
- GB-A- 2 285 622
- JP-A- 3 160 243
- JP-A- 8 178 078
- JP-A- H0 285 165
- JP-A- 10 288 359
- JP-A- H03 160 243
- JP-A- 2002 310 463
- JP-A- 2010 014 296
- US-A- 4 915 250

## Description

### TECHNICAL FIELD

The present invention relates to a heat storage device that can suppress decrease in room temperature during defrosting operation or improve heating start performance by utilization of heat stored while an air conditioner performs heating operation. The present invention also relates to an air conditioner having such a heat storage device.

### BACKGROUND ART

A conventional heat pump air conditioner performs defrosting by switching from a heating cycle to a cooling cycle with use of a four-way valve when frost has been formed on an outdoor heat exchanger during heating operation. In this defrosting method, although an indoor fan is stopped, cold air gradually flows out of an indoor unit, thus posing a defect of warmth being lost. There has been another problem that it takes time to reach a predetermined heating temperature at the start of heating operation in winter.

There is thus assembled, in a refrigeration cycle of an air conditioner, a heat storage device for storing heat of an electric heater, a compressor, or the like, so as to improve the properties of heating operation with use of stored thermal energy thereof. Such a heat storage device includes a heat storage material such as paraffin, which has small heat storage capacity and thus the heat storage device needs to be large in order to secure necessary heat storage capacity. As a result, there have been posed problems of difficulty in accommodation of the heat storage device into an air conditioner as well as of increase in cost.

In view of the above, there has been proposed a heat storage device of a type opened to atmosphere, which includes a heat storage container accommodating a heat storage material mainly composed of water that has large heat storage capacity and can be obtained at a low cost (see, for example, document JP 10-288359 A.

Document JP H03-160243 also discloses such a heat storage device.

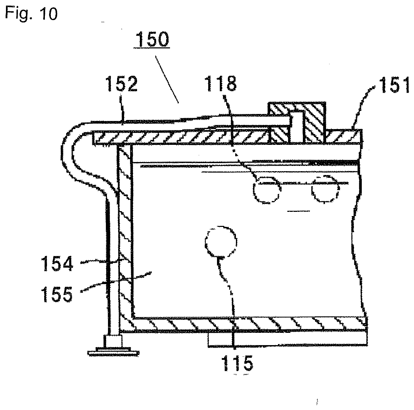

Fig. 10 is a view exemplifying a conventional heat storage device. In Fig. 10, a heat storage device 150 includes a heat storage tank 154 and a lid 151. The heat storage tank 154 accommodates a heat storage material 155 mainly composed of water, a heat radiating heat exchanger 115, and a heat absorbing heat exchanger 118. In order to prevent evaporation of the heat storage material 155 as well as to release pressure generated by vapor in the heat storage tank, there is provided a capillary tube 152.

### SUMMARY OF THE INVENTION

### PROBLEMS TO BE SOLVED BY THE INVENTION

However, in the conventional configuration described above, there has been a problem that the heat storage material leaks if an outdoor unit of an air conditioner including the heat storage device is made inclined during delivery or installation. It has been thus proposed to locate the capillary tube such that a distal opening thereof is directed opposite to the gravity center direction of the outdoor unit. However, such disposition is effective to inclination in one direction, and there has been a problem that the heat storage material leaks if the outdoor unit is made inclined in a direction opposite to the gravity center direction of the outdoor unit. Furthermore, provision of a floating member has been proposed to solve this problem, which complicates the structure and also increases the cost.

The present invention has been made in view of these problems of the conventional techniques. It is an object of the present invention to provide, at a low cost, a heat storage device of a type opened to atmosphere, which can suppress evaporation of a heat storage material and reduce inner pressure, as well as can prevent leakage of the heat storage material even if the heat storage device is made inclined in any one of forward, backward, leftward, and rightward directions.

### MEANS TO SOLVE THE PROBLEMS

In order to achieve the object mentioned above, the present invention provides an air conditioner comprising a heat storage device, the heat storage device being disposed to circumscribe a compressor that is provided in an outdoor unit of the air conditioner, the heat storage device of a type opened to atmosphere, the heat storage device including a heat storage tank, as well as a heat storage heat exchanger and a heat storage material accommodated in the heat storage tank, wherein the heat storage tank is provided with a groove or a capillary tube at a top of the heat storage tank substantially entirely along an outer periphery of the heat storage tank, the groove or the capillary tube has a first end opened into the heat storage tank and a second end opened to atmosphere. Therefore, the increase in pressure due to vapor generated from the heat storage material in the heat storage tank is suppressed. Furthermore, excessive release of vapor to atmosphere is prevented by setting an open area of the groove or the capillary tube. Moreover, the groove or the capillary tube is provided at the top of the heat storage tank substantially entirely along the outer periphery of the tank. Therefore, even in a case where the heat storage device is made inclined in any one of forward, backward, rightward, and leftward directions and the heat storage material flows into the groove or the capillary tube, the liquid level of the heat storage material in the groove or the capillary tube is physically balanced with the liquid level in the heat storage tank at a certain position, with a result that the liquid level does not reach the opening of the groove or the capillary tube to atmosphere and the heat storage material does not leak outside. It is therefore possible to prevent leakage of the heat storage material even if the heat storage device is made inclined when the heat storage device is assembled to an air conditioner or when the air conditioner is delivered or installed.

Furthermore, according to the present invention, one of a lid provided to the heat storage tank and the heat storage tank is provided with a fitting groove so as to have the lid and the heat storage tank fitted to each other. Moreover, the fitting groove is provided with the groove mentioned earlier, and the member provided with the groove is molded with use of resin. It is therefore possible to provide the heat storage device at a low cost.

### EFFECTS OF THE INVENTION

The present invention realizes, at a low cost, the heat storage device that suppresses evaporation of the heat storage material and reduces inner pressure, as well as can prevent leakage of the heat storage material even if the heat storage device is made inclined in any one of forward, backward, leftward, and rightward directions.

### BRIEF DESCRIPTION OF THE DRAWINGS

Fig. 1 is a configuration diagram of an air conditioner including a heat storage device according to the present invention.
Fig. 2 is a pattern diagram of the air conditioner of Fig. 1, depicting operation thereof and a flow of a refrigerant during normal heating.
Fig. 3 is a pattern diagram of the air conditioner of Fig. 1, depicting operation thereof and a flow of the refrigerant during defrosting/heating.
Fig. 4 is a perspective view of a state where the heat storage device according to the present invention is attached to a compressor.
Fig. 5 is a perspective view of a state immediately before the heat storage device according to the present invention is attached to the compressor.
Fig. 6 is a perspective view of an exemplary configuration of the heat storage device according to the present invention.
Fig. 7 is a perspective view of an exemplary configuration of a groove in the heat storage device according to the present invention.
Fig. 8 is a sectional view of an exemplary configuration of a fitted portion between a lid and a heat storage tank in the heat storage device according to the present invention.
Fig. 9 is a sectional view of another exemplary configuration of the fitted portion between the lid and the heat storage tank in the heat storage device according to the present invention.
Fig. 10 is a sectional view of a conventional heat storage device.

### DESCRIPTION OF EMBODIMENTS

A first embodiment relates to an air conditioner comprising a heat storage device of a type opened to atmosphere, the heat storage device being disposed to circumscribe a compressor that is provided in an outdoor unit of said air conditioner, the heat storage device including a heat storage tank, as well as a heat storage heat exchanger and a heat storage material accommodated in the heat storage tank, wherein the heat storage tank is provided with a groove or a capillary tube at a top of the heat storage tank substantially entirely along an outer periphery of the heat storage tank, the groove or the capillary tube has a first end opened into the heat storage tank and a second end opened to atmosphere. In this manner, the groove or the capillary tube is provided at the top of the heat storage tank substantially entirely along the outer periphery of the tank. Therefore, even in a case where the heat storage device is made inclined in any one of forward, backward, rightward, and leftward directions and the heat storage material flows into the groove or the capillary tube, the liquid level of the heat storage material in the groove or the capillary tube is physically balanced with the liquid level in the heat storage tank at a certain position, with a result that the liquid level does not reach the opening of the groove or the capillary tube to atmosphere and the heat storage material does not leak outside.

A second embodiment relates to an air conditioner comprising a heat storage device of a type opened to atmosphere, the heat storage device including a heat storage tank, a heat storage heat exchanger and a heat storage material accommodated in the heat storage tank, and a lid closing an upper opening of the heat storage tank, wherein one of the heat storage tank and the lid is provided at an outer periphery with a fitting groove, the fitting groove is fitted to the lid or the heat storage tank facing the fitting groove with a packing member being interposed therebetween, and the fitting groove is provided therein with the groove. Therefore, the groove can be configured easily and the lid is made detachable. As a result, it is possible to enhance assembling performance and serviceability of the heat storage tank.

According to a third embodiment the fitting groove and the packing member are matched with each other in cross sectional shapes thereof. There is formed no gap between the fitting groove and the packing member. It is therefore possible to improve airtightness of the groove so as to reduce leakage of the heat storage material from the fitting portion.

According to a fourth embodiment, the member provided with the groove is molded with use of resin. It is possible to easily form the groove by resin molding, so that the heat storage device can be provided at a low cost.

According to said first embodiment, waste heat of the compressor can be stored in the heat storage device, so as to improve the properties of heating operation of the air conditioner with use of stored thermal energy thereof.

An embodiment of the present invention is described below with reference to the drawings. It should be noted that the present invention is not limited to this embodiment.

### (Embodiment 1)

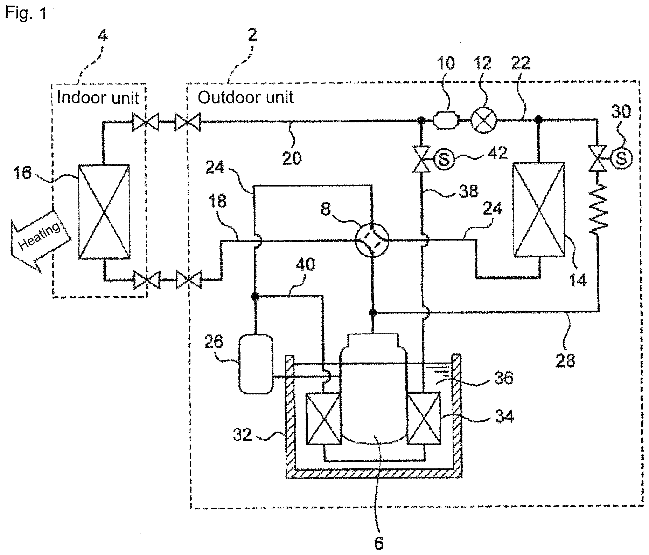

Fig. 1 depicts a configuration of an air conditioner having a heat storage device according to the present invention. The air conditioner includes an outdoor unit 2 and an indoor unit 4 connected to each other via refrigerant piping.

As shown in Fig. 1, the outdoor unit 2 accommodates therein a compressor 6, a four-way valve 8, a strainer 10, an expansion valve 12, and an outdoor heat exchanger 14, while the indoor unit 4 accommodates an indoor heat exchanger 16 therein. These components are connected to each other via refrigerant piping so as to configure a refrigeration cycle.

More specifically, the compressor 6 and the indoor heat exchanger 16 are connected to each other via a first pipe 18 on which the four-way valve 8 is provided, and the indoor heat exchanger 16 and the expansion valve 12 are connected to each other via a second pipe 20 on which the strainer 10 is provided. Furthermore, the expansion valve 12 and the outdoor heat exchanger 14 are connected to each other via a third pipe 22, and the outdoor heat exchanger 14 and the compressor 6 are connected to each other via a fourth pipe 24.

The four-way valve 8 is located midway on the fourth pipe 24, and an accumulator 26 for separating a liquid refrigerant and a gaseous refrigerant is provided on the fourth pipe 24 on a refrigerant suction side of the compressor 6. The compressor 6 and the third pipe 22 are connected to each other via a fifth pipe 28, on which a first solenoid valve 30 is provided.

Furthermore, a heat storage tank 32 accommodating a heat storage heat exchanger 34 therein is provided around the compressor 6 and filled with a heat storage material (for example, ethylene glycol aqueous solution) 36 used for exchanging heat with the heat storage heat exchanger 34.

The heat storage tank 32, the heat storage heat exchanger 34, and the heat storage material 36 constitute the heat storage device.

Moreover, the second pipe 20 and the heat storage heat exchanger 34 are connected to each other via a sixth pipe 38, and the heat storage heat exchanger 34 and the fourth pipe 24 are connected to each other via a seventh pipe 40. A second solenoid valve 42 is provided on the sixth pipe 38.

The indoor unit 4 accommodates therein, in addition to the indoor heat exchanger 16, a ventilation fan (not shown), vertical wind direction changing blades (not shown), and horizontal wind direction changing blades (not shown). The indoor heat exchanger 16 exchanges heat between indoor air sucked into the indoor unit 4 by the ventilation fan and a refrigerant flowing through the indoor heat exchanger 16 so that air heated or cooled by heat exchange may be blown into a room during heating or cooling, respectively. As an occasion demands, the vertical wind direction changing blades vertically change the direction of air blown out of the indoor unit 4 and the horizontal wind direction changing blades horizontally change the direction of air brown out of the indoor unit 4.

The compressor 6, the ventilation fan, the vertical wind direction changing blades, the horizontal wind direction changing blades, the four-way valve 8, the expansion valve 12, the solenoid valves 30 and 42, and the like are electrically connected to and controlled by a controller (for example, a microcomputer not shown).

Connection relationships between and functions of the components in refrigeration cycle equipment thus configured according to the present invention are described below with reference to a flow of the refrigerant, exemplifying the case of heating operation.

The refrigerant discharged from a discharge port of the compressor 6 passes through the four-way valve 8 and reaches the indoor heat exchanger 16 via the first pipe 18. The refrigerant condenses in the indoor heat exchanger 16 by exchanging heat with indoor air, leaves the indoor heat exchanger 16, and passes through the second pipe 20 as well as through the strainer 10, which prevents invasion of foreign substances into the expansion valve 12, before the refrigerant reaches the expansion valve 12. The refrigerant is reduced in pressure by the expansion valve 12 and reaches the outdoor heat exchanger 14 via the third pipe 22. The refrigerant then evaporates in the outdoor heat exchanger 14 by exchanging heat with outdoor air and passes through the fourth pipe 24, the four-way valve 8, and the accumulator 26, before the refrigerant returns to a suction port of the compressor 6.

The fifth pipe 28 branched from the first pipe 18 between the discharge port of the compressor 6 and the four-way valve 8 joins the third pipe 22 between the expansion valve 12 and the outdoor heat exchanger 14 via the first solenoid valve 30.

Furthermore, the heat storage tank 32 accommodating therein the heat storage material 36 and the heat storage heat exchanger 34 is disposed to surround and contact the compressor 6, so as to store heat generated by the compressor 6 in the heat storage material 36. The sixth pipe 38 branched from the second pipe 20 between the indoor heat exchanger 16 and the strainer 10 reaches an inlet of the heat storage heat exchanger 34 via the second solenoid valve 42, and the seventh pipe 40 extending from an outlet of the heat storage heat exchanger 34 joins the fourth pipe 24 between the four-way valve 8 and the accumulator 26. Alternatively, the joining position may be between the accumulator 26 and the compressor 6. In such a case, it is possible to avoid absorption of heat due to heat capacity of the accumulator 26 of itself.

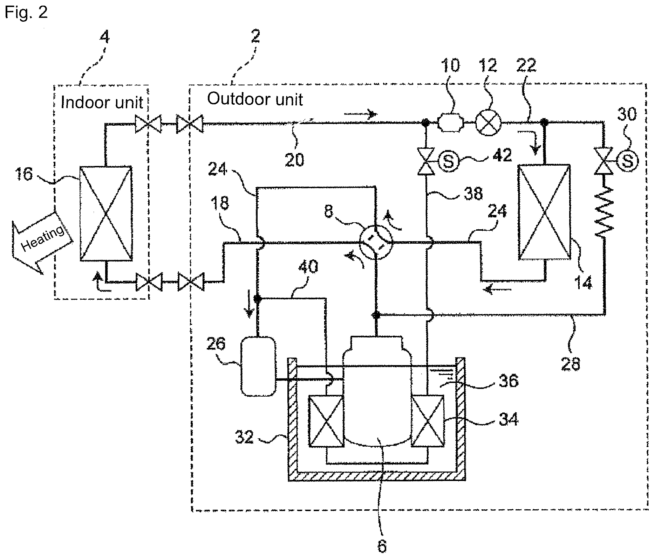

Operation of the air conditioner during normal heating is described next with reference to Fig. 2 that schematically depicts the operation of the air conditioner of Fig. 1 and a flow of the refrigerant during normal heating.

During normal heating operation, the first solenoid valve 30 and the second solenoid valve 42 are controlled to be closed. In this case, as described above, the refrigerant discharged from the discharge port of the compressor 6 passes through the four-way valve 8 and reaches the indoor heat exchanger 16 via the first pipe 18. Having condensed by exchanging heat with indoor air in the indoor heat exchanger 16, the refrigerant leaves the indoor heat exchanger 16, passes through the second pipe 20, and reaches the expansion valve 12. The refrigerant is then reduced in pressure by the expansion valve 12 and reaches the outdoor heat exchanger 14 via the third pipe 22. Having evaporated by exchanging heat with outdoor air in the outdoor heat exchanger 14, the refrigerant passes through the fourth pipe 24 as well as through the four-way valve 8 and returns to the suction port of the compressor 6.

Heat generated by the compressor 6 is transferred from an outer wall of the compressor 6 to an outer wall of the heat storage tank 32 and is stored in the heat storage material 36 that is accommodated in the heat storage tank 32.

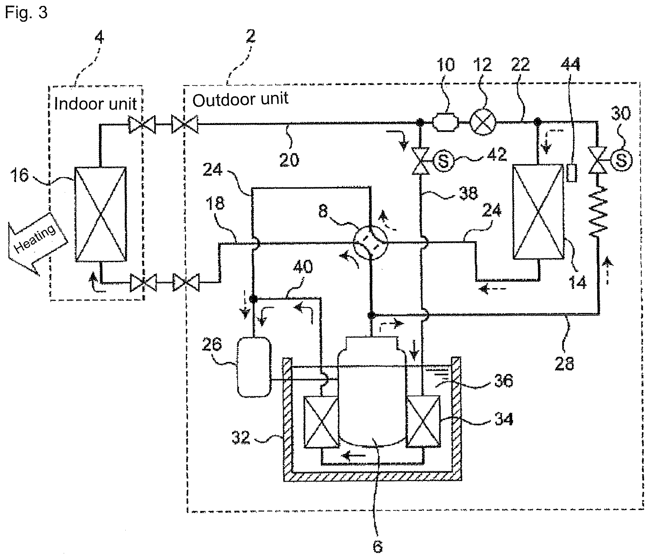

Operation of the air conditioner during defrosting/heating is described next with reference to Fig. 3 that schematically depicts the operation of the air conditioner of Fig. 1 and a flow of the refrigerant during defrosting/heating. In this figure, solid arrows indicate a flow of the refrigerant used for heating, and dotted arrows indicate a flow of the refrigerant used for defrosting.

If frost is formed and grows on the outdoor heat exchanger 14 during normal heating operation described above, airflow resistance of the outdoor heat exchanger 14 increases to thereby reduce the amount of air passing therethrough, resulting in reduction of the evaporating temperature in the outdoor heat exchanger 14. As shown in Fig. 3, the air conditioner according to the present invention is provided with a temperature sensor 44 for detecting a piping temperature of the outdoor heat exchanger 14, and if this temperature sensor 44 detects a reduced evaporating temperature compared with the evaporating temperature in the case where no frost is formed, the controller outputs a command to shift from normal heating operation to defrosting/heating operation.

When the air conditioner is shifted from normal heating operation to defrosting/heating operation, the first solenoid valve 30 and the second solenoid valve 42 are controlled to be opened. In this case, in addition to the flow of the refrigerant during normal heating operation as described above, part of a gaseous refrigerant discharged from the discharge port of the compressor 6 passes through the fifth pipe 28 and the first solenoid valve 30 and joins the refrigerant passing through the third pipe 22 to heat the outdoor heat exchanger 14. Having condensed and turned into a liquid phase, the refrigerant passes through the fourth pipe 24 and returns to the suction port of the compressor 6 via the four-way valve 8 and the accumulator 26.

Furthermore, part of the liquid refrigerant diverged from the second pipe 20 between the indoor heat exchanger 16 and the strainer 10 passes through the sixth pipe 38 and the second solenoid valve 42 and absorbs heat from the heat storage material 36 in the heat storage heat exchanger 34. The liquid refrigerant then evaporates and turns into a gas phase. The resultant gaseous refrigerant passes through the seventh pipe 40, joins the refrigerant passing through the fourth pipe 24, and returns to the suction port of the compressor 6 via the accumulator 26.

Although the refrigerant returning to the accumulator 26 contains the liquid refrigerant returning from the outdoor heat exchanger 14, the latter is admixed with the hot gaseous refrigerant returning from the heat storage heat exchanger 34 to thereby promote evaporation of the liquid refrigerant. Accordingly, the liquid refrigerant may not pass through the accumulator 26 and return to the compressor 6, thus making it possible to enhance the reliability of the compressor 6.

At the start of defrosting/heating operation, the temperature of the outdoor heat exchanger 14 is below the freezing point due to adhesion of frost, but when the outdoor heat exchanger 14 is heated by the gaseous refrigerant discharged from the discharge port of the compressor 6, frost melts at around zero degree and the temperature of the outdoor heat exchanger 14 starts to increase again upon termination of melting of the frost. When the temperature sensor 44 detects such a temperature rise of the outdoor heat exchanger 14, it is determined that defrosting has been completed and the controller outputs a command to shift from defrosting/heating operation to normal heating operation.

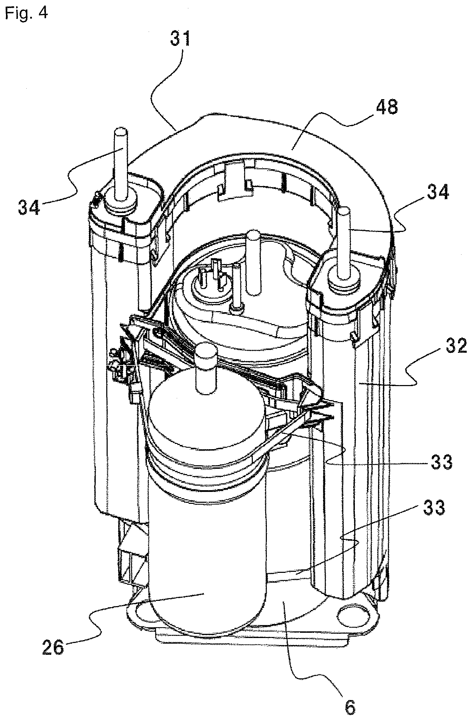

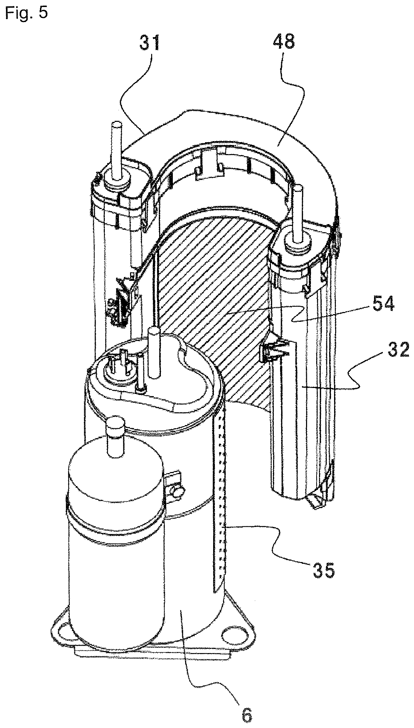

Fig. 4 depicts a state where a heat storage device 31 is attached to the compressor 6. The heat storage device 31 is made in close contact with and fixed to the compressor 6 by means of a band 33. Furthermore, as shown in Fig. 5, in order to improve the adhesion property between a heat transfer portion 54 of the heat storage tank 32 and the compressor 6, interposed between the heat storage tank 32 and the compressor 6 is a resin (such as silicon) sheet 35, which is elastic and excellent in heat transfer property.

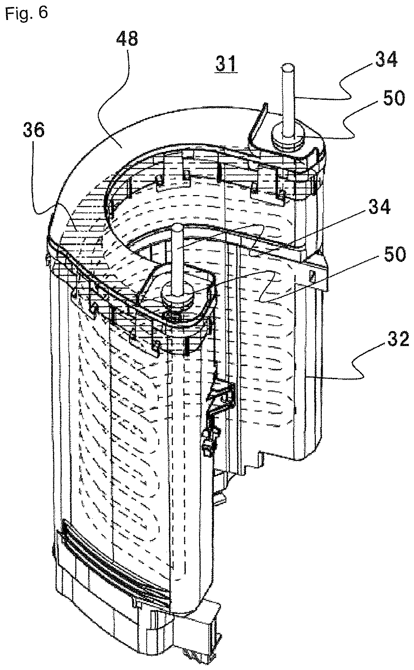

Fig. 6 is a view of the heat storage device 31. The heat storage device 31 includes the heat storage tank 32, and a lid 48 closing an upper opening of the heat storage tank 32. The heat storage tank 32 accommodates therein the heat storage heat exchanger 34 configured by a copper pipe or the like bent into a serpiginous shape, and the heat storage material 36 composed of water (for example, ethylene glycol aqueous solution). Furthermore, the heat storage heat exchanger 34 has two ends each of which is supported and fixed to the lid 48 so as to keep airtightness therebetween, with a sealing member 50 being interposed therebetween. The heat storage material 36 occupies about 80% of the maximum capacity of the heat storage tank 32 at ordinary temperature.

The heat storage tank 32 is formed into a shape so as to be in contact with the outer peripheral surface of the compressor 6, and is molded with use of a resin material.

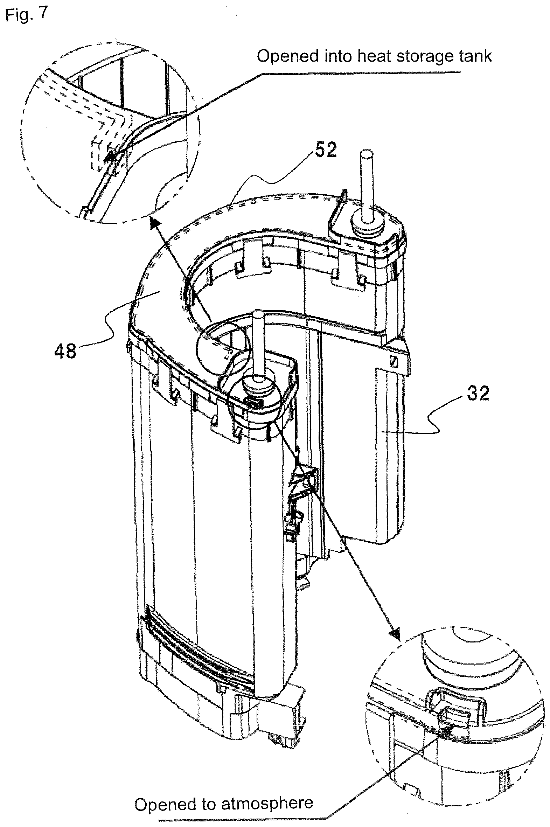

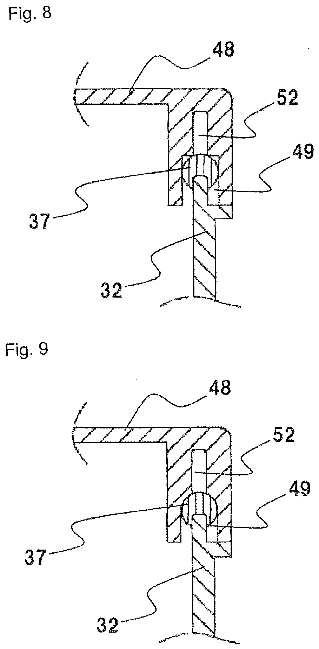

The lid 48 is also molded with use of a resin material. As shown in Fig. 8, the lid 48 is provided with a fitting groove 49 entirely along the outer periphery of the lid 48. The fitting groove 49 is provided with a packing member 37, and is fitted to the heat storage tank 32 so as to secure airtightness. Moreover, the fitting groove 49 provided along the outer periphery of the lid 48 has a groove 52. The groove 52 has a length of 80% or more of the entire periphery of the heat storage tank 32. The groove 52 has a first end opened into the heat storage tank 32, and a second end opened to atmosphere (see Fig. 7).

Described next is the behavior of the heat storage device configured as described above.

As described earlier, the heat storage device 31 stores, in the heat storage material 36, heat generated by the compressor 6 during heating operation. Upon shifting from normal heating operation to defrosting/heating operation, part of the liquid refrigerant diverged from the second pipe 20 between the indoor heat exchanger 16 and the strainer 10 absorbs heat from the heat storage material 36 in the heat storage heat exchanger 34. The liquid refrigerant then evaporates and turns into a gas phase. Therefore, it is further preferred if the efficiency of absorbing heat generated by the compressor 6 and the heat insulating efficiency are higher.

In the heat storage device 31 according to the present invention, the heat storage tank 32 is made of resin. Therefore, the heat storage tank 32 is less likely to radiate heat in comparison to a tank made of a highly heat conductive metal, resulting in improvement in heat insulating efficiency. Furthermore, in order to improve the heat absorbing efficiency, there is interposed and made in close contact between the compressor 6 and the heat storage tank 32, the sheet 35 that is excellent in heat transfer property. Because the sheet 35 is provided with a plurality of through holes, it is possible to discharge air occasionally left upon attachment and thus suppress deterioration in heat conductivity.

If the heat transfer portion 54 (see Fig. 5) of the heat storage tank 32 is made of highly heat conductive resin containing carbon, powdery metal, or the like, it is possible to further improve the heat absorbing efficiency of the heat storage device 31. In this case, the heat transfer portion 54 of the heat storage tank 32 may be primarily molded with use of highly heat conductive resin, and then the heat storage tank 32 may be secondarily molded with use of ordinary resin that is not highly heat conductive. Alternatively, the entire heat storage tank 32 may be primarily molded with use of ordinary resin and at the same time, only the heat transfer portion 54 may be formed by mixing carbon, powdery metal, or the like. Still alternatively, the heat transfer portion 54 may be configured by a highly heat conductive metal plate, in which similar effects can be achieved.

In the case where the heat storage material 36 contains water as in the heat storage device 31 according to the present invention, it is necessary to suppress evaporation of water as well as treat in order to cope with increase in inner pressure of the heat storage tank 32 due to vapor.

In the heat storage device 31 according to the present invention, the groove 52 is provided in the fitting groove 49 located in the outer periphery of the lid 48, and the first end of the groove 52 is opened into the heat storage tank 32 while the second end thereof is opened to atmosphere. Therefore, vapor generated in the heat storage tank 32 is released to atmosphere through the groove 52 thereby to suppress increase in pressure. Furthermore, the groove 52 has an open area set to be small, so as to suppress the degree of evaporation of the heat storage material 36.

The inside of the heat storage tank 32 and atmosphere (outside) are made in communication with each other by the groove 52. Accordingly, if the heat storage device 31 is made inclined, for example, the heat storage material 36 will flow into the groove 52 to leak outside. However, in the heat storage device 31 according to the present invention, the groove 52 is provided along the outer periphery of the heat storage tank 32 so as to surround substantially entirely or preferably 80% or more of the entire periphery of the heat storage tank 32. Even if the heat storage device 31 is made inclined and the heat storage material 36 flows into the groove 52, the liquid level in the groove 52 is physically balanced with the liquid level in the heat storage tank 32 at a certain position. Therefore, the liquid level does not reach the opening of the groove 52 to atmosphere and the heat storage material 36 will not leak outside. The heat storage tank 32 according to the present embodiment has a horseshoe shape. However, the idea described above is not limited by the shape of the heat storage tank. The effects similar to the above case can be achieved even in a case where the groove 52 is configured by a capillary tube that is provided along the outer periphery of the heat storage tank 32.

Therefore, it is possible to prevent leakage of the heat storage material in a case where the heat storage device 31 is made inclined when the heat storage device 31 is assembled to an air conditioner, when such an air conditioner is delivered or installed, or the like.

Furthermore, as described earlier, in the heat storage device 31 according to the present invention, the lid 48 is provided with the fitting groove 49 that has the groove 52, and the fitting groove 49 provided with the packing member 37 is fitted to the heat storage tank 32 so as to secure airtightness. In such a configuration, the groove 52 can be easily formed, as well as the lid 48 is made detachable. Therefore, it is possible to enhance assembling performance and serviceability of the heat storage tank 32. Furthermore, because the lid 48 is molded with use of a resin material, the groove 52 can be easily formed, which realizes the heat storage device 31 at a low cost. In the present embodiment, the lid 48 is provided with the fitting groove 49 and the groove 52. Alternatively, these grooves may be provided in the heat storage tank 32.

Moreover, as shown in Fig. 9, if the cross sectional shape of the fitting groove 49 and the cross sectional shape of the packing member 37 are matched with each other, there is formed no gap between the fitting groove 49 and the packing member 37. It is therefore possible to improve airtightness of the groove 52 to reduce leakage of the heat storage material from the fitting portion.

### INDUSTRIAL APPLICABILITY

The heat storage device according to the present invention relates to storage, in the heat storage material, of waste heat generated by the compressor, and is useful in an air conditioner, a refrigerator, a water heater, a heat pump washing machine, and the like.

### EXPLANATION OF REFERENCE NUMERALS

2 outdoor unit, 4 indoor unit, 6 compressor, 8 four-way valve, 10 strainer, 12 expansion valve, 14 outdoor heat exchanger, 16 indoor heat exchanger, 18 first pipe, 20 second pipe, 22 third pipe, 24 fourth pipe, 26 accumulator, 28 fifth pipe, 30 first solenoid valve, 31 heat storage device, 32 heat storage tank, 33 band, 34 heat storage heat exchanger, 35 sheet, 36 heat storage material, 37 packing member, 38 sixth pipe, 40 seventh pipe, 42 second solenoid valve, 44 temperature sensor, 48 lid, 49 fitting groove, 50 sealing member, 52 groove, 54 heat transfer portion

## Claims

1. An air conditioner comprising a heat storage device, the heat storage device being disposed to circumscribe a compressor (6) that is provided in an outdoor unit (2) of the air conditioner, the heat storage device of a type opened to atmosphere comprising:
a heat storage tank (32), and
a heat storage material (36) accommodated in the heat storage tank (32),
**characterized in that**:
the heat storage tank (32) is provided with a groove (52) or a capillary tube at a top of the heat storage tank (32) substantially entirely along an outer periphery of the heat storage tank (32), and the groove (52) or the capillary tube has a first end opened into the heat storage tank (32) and a second end opened to atmosphere.

2. The air conditioner according to claim 1, wherein the heat storage tank (32) is provided at the top with an opening and a lid (48) closing the opening, one of the heat storage tank (32) and the lid (48) is provided at an outer periphery with a fitting groove (49), the fitting groove (49) is fitted to the lid (48) or the heat storage tank (32) facing the fitting groove (49) with a packing member (37) being interposed therebetween, and the fitting groove (49) is provided therein with the groove (52).

3. The air conditioner according to claim 2, wherein the fitting groove (49) and the packing member (37) are matched with each other in cross sectional shapes thereof.

4. The air conditioner according to any one of claims 1 to 3, wherein the lid (48) or the heat storage tank (32) provided with the groove (52) is molded with use of resin.

## Patentansprüche

1. Klimaanlage mit Wärmespeichervorrichtung, wobei die Wärmespeichervorrichtung angeordnet ist, um einen Kompressor (6) zu umgeben, der in einer Außeneinheit (2) der Klimaanlage vorgesehen ist, wobei die Wärmespeichervorrichtung eines zur Atmosphäre geöffneten Typs Folgendes umfasst:
einen Wärmespeicherbehälter (32), und
ein Wärmespeichermaterial (36), das in dem Wärmespeicherbehälter (32) untergebracht ist,
**dadurch gekennzeichnet, dass**:
der Wärmespeicherbehälter (32) im Wesentlichen gänzlich entlang einem Außenrand des Wärmespeicherbehälters (32) mit einer Nut (52) oder einem Kapillarrohr an einer Oberseite des Wärmespeicherbehälters (32) versehen ist und die Nut (52) oder das Kapillarrohr ein in den Wärmespeicherbehälter (32) geöffnetes erstes Ende und ein zur Atmosphäre geöffnetes zweites Ende aufweist.

2. Klimaanlage nach Anspruch 1, wobei der Wärmespeicherbehälter (32) an der Oberseite mit einer Öffnung und einem die Öffnung verschließenden Deckel (48) versehen ist, wobei einer von dem Wärmespeicherbehälter (32) und dem Deckel (48) an einem Außenrand mit einer Passnut (49) versehen ist, wobei die Passnut (49) an den Deckel (48) oder den der Passnut (49) zugewandten Wärmespeicherbehälter (32) mit einem dazwischen eingefügten Dichtungselement (37) angepasst ist, und wobei die Passnut (49) darin mit der Nut (52) versehen ist.

3. Klimaanlage nach Anspruch 2, wobei die Passnut (49) und das Dichtungselement (37) in ihren Querschnittsformen aneinander angepasst sind.

4. Klimaanlage nach einem der Ansprüche 1 bis 3, wobei der mit der Nut (52) versehene Deckel (48) oder Wärmespeicherbehälter (32) aus Harz geformt ist.

## Revendications

1. Conditionneur d'air comprenant un dispositif d'accumulation de chaleur, le dispositif d'accumulation de chaleur étant disposé pour entourer un compresseur (6) qui est ménagé dans une unité extérieure (2) du conditionneur d'air, le dispositif d'accumulation de chaleur, d'un type ouvert sur l'atmosphère, comprenant :
un réservoir d'accumulation de chaleur (32), et
un matériau d'accumulation de chaleur (36) logé dans le réservoir d'accumulation de chaleur (32),
**caractérisé en ce que**:
le réservoir d'accumulation de chaleur (32) comporte une rainure (52) ou un tube capillaire au niveau d'une partie supérieure du réservoir d'accumulation de chaleur (32) de façon essentiellement complète le long d'une périphérie externe du réservoir d'accumulation de chaleur (32), et la rainure (52) ou le tube capillaire possède une première extrémité ouverte dans le réservoir d'accumulation de chaleur (32) et une deuxième extrémité ouverte sur l'atmosphère.

2. Conditionneur d'air selon la revendication 1, dans lequel le réservoir d'accumulation de chaleur (32) comporte, au niveau de la partie supérieure, une ouverture et un couvercle (48) fermant l'ouverture, l'un du réservoir d'accumulation de chaleur (32) et du couvercle (48) comporte, au niveau d'une périphérie externe, une rainure de montage (49), la rainure de montage (49) est montée sur le couvercle (48) ou le réservoir d'accumulation de chaleur (32) faisant face à la rainure de montage (49) avec un élément de garniture (37) étant intercalé entre eux, et la rainure de montage (49) comporte en son sein la rainure (52).

3. Conditionneur d'air selon la revendication 2, dans lequel la rainure de montage (49) et l'élément de garniture (37) ont des formes en coupe en correspondance l'un avec l'autre.

4. Conditionneur d'air selon l'une quelconque des revendications 1 à 3, dans lequel le couvercle (48) ou le réservoir d'accumulation de chaleur (32) pourvu de la rainure (52) est moulé à l'aide de résine.
